# EUROPEAN PATENT APPLICATION

(11) **EP 1 584 639 A1**
(43) Date of publication of application: **12.10.2005**
(21) Application number: 03768158.2
(22) Date of filing: 24.12.2003
(51) Int. Cl.: C08G 59/24, C08G 59/68, C08L 63/00

(54) **CURABLE RESIN COMPOSITION AND PRODUCTS OF CURING THEREOF**

(30) Priority: 27.12.2002 JP 2002381563
(71) Applicant: DAICEL CHEMICAL INDUSTRIES, LTD., Sakai-shi, Osaka 590-0905 (JP)
(72) Inventor: MAESHIMA, Hisashi, Otake-shi, Hiroshima 739-0651 (JP)
(74) Representative: Grünecker, Kinkeldey, Stockmair & Schwanhäusser Anwaltssozietät
(86) International application number: PCT/JP2003/016568
(87) International publication number: WO 2004/060958

(57) **Abstract**

The present invention provides a heat-curable resin composition which is curable and is capable of providing a cured product with low shrinkage in curing. The heat-curable resin composition of the present invention includes an alicyclic epoxy compound (a) having a structure represented by the following general formula (1), 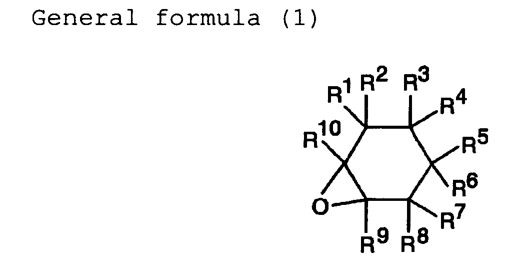 [In the general formula (1): R¹ to R¹⁰ each represent hydrogen, or a saturated or unsaturated hydrocarbon group having 1 to 20 carbon atoms, and an ether bond, an ester bond, or an alcoholic hydroxyl group may be included in the hydrocarbon group; R¹ to R¹⁰ may each represent a residue derived by removing any one of R¹ to R¹⁰ from the structure represented by the general formula (1), or a residue derived by removing hydrogen from any one of R¹ to R¹⁰; and the phrase "in the hydrocarbon group" refers to "inside the hydrocarbon group", "at terminals of the hydrocarbon group", or "within bonds of the hydrocarbon group"], a cationic polymerization initiator (i), a surfactant (e), and optionally a polyol (b) having two or more hydroxyl groups on terminals.

## Description

### Technical Field

The present invention relates to a heat-curable resin composition and a heat-cured product of the composition. The present invention more specifically relates to a useful material serving as an adhesive or insulating encapsulant used for assembly of optical parts or electronic parts requiring precise positional accuracy because the cured product has low shrinkability in curing.

### Background Art

Various curable resin compositions have been heretofore used as adhesives, encapsulants, and the like, and have been changed to solvent free-type curable resin compositions. However, a system involving radical polymerization of an acrylic compound has problems such as insufficient curability due to polymerization inhibition by oxygen and strong monomer odor.

Thus, JP-A-11-302358 (claims 1 to 4, paragraph 0012, Table 1) discloses a photocurable composition containing at least a photocationically polymerizable compound and a photoacid generator, in which a photocurable composition containing the photocationically polymerizable compound including 50 to 100% by weight of a bisphenol A-type epoxy resin and 0 to 50% by weight of a diluent has a shrinkage ratio in curing of less than 10%.

Further, JP-A-11-12495 (claims 1 and2, paragraph 0016, Example 1) discloses a UV-curable composition for an optical disc containing 5% by weight or more of urethane (meth) acrylate and having a shrinkage ratio in curing of 8.5% or less.

JP-A-2002-256058 (paragraph 0005) discloses that an acrylic UV-curable resin has a high shrinkage ratio in curing of 10% or more.

A method of reducing shrinkage ratio in curing of a curable resin composition involves mixing of an inorganic additive. However, the addition of the inorganic additive may not only degrade smoothness of a resin surface but also cause strength reduction of the resin.

An epoxy resin has such a feature that it provides excellent heat resistance and low shrinkage in curing compared with those of other curable resins. Even very low shrinkage in curing may cause crack formation in a cured product or deformation of adherent substances, and thus the epoxy resin is not appropriate for uses requiring dimensional stability at high precision.

However, the above-described reports each refer to a photocurable resin, and the photocurable resin has disadvantages in that it generally has poor reactivity and cannot be used for a molded product with a complicated shape which cannot be subjected to light. Thus, heat curing is desired for obtaining a complicated molded product.

Of epoxy compounds, an alicyclic epoxy compound is used for electrical materials because a cured product having a high glass transition point (Tg) is obtained and the alicyclic epoxy compound has a small chlorine content.

Further, the alicyclic epoxy compound has such a feature that it cures in a short period of time by mixing a heat cationic polymerization initiator and heating the mixture. However, a cured product obtained through heat cationic polymerization of the alicyclic epoxy resin has disadvantages in that shrinkage in curing takes places. Further, warping, cracking, peeling, and the like are easily caused by internal stress generated from shrinkage in curing, and thus the cured product is hardly used in fields requiring precise adhesion and the like.

JP-A-08-188702 (claims 1 to 6, paragraphs 0015 and 0016, Examples) focuses on thermal expansion property of a cyanate resin, and discloses that a cured product obtained through heat curing of a curable composition including the cyanate resin, bisphenol A, a bisphenol A-type epoxy resin, and methyl ethyl ketone has very low shrinkage in curing. However, the curable composition contains a solvent, and low shrinkage in curing was desired for a solvent free curable composition.

### Disclosure of the Invention

An object of the present invention is to provide a heat-curable resin composition which is heat-curable and is capable of providing a cured product with low shrinkage in curing.

The inventor of the present invention has conducted extensive studies to solve the above-described problems. As a result, the inventor of the present invention has applied a composition including an alicyclic epoxy compound, a polyol, and a surfactant onto a flexible film, and formed a coating film through heat cationic polymerization. Thus, the inventor of the present invention has found that warping of the flexible film having the coating film formed thereon is significantly improved, and that warping of the flexible film significantly improves even in a cured product obtained through heat cationic polymerization of an alicyclic epoxy compound having a polyester chain in a molecule, to thereby complete the present invention.

That is, a first aspect of the present invention provides a heat-curable resin compositionincluding an alicyclic epoxy compound (a) having a structure represented by the following general formula (1), 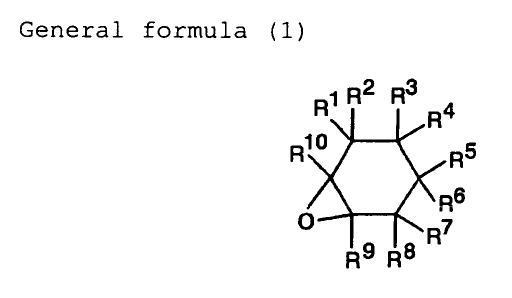 [In the general formula (1) : R¹ to R¹⁰ each represent hydrogen, or a saturated or unsaturated hydrocarbon group having 1 to 20 carbon atoms, and an ether bond, an ester bond, or an alcoholic hydroxyl group may be included in the hydrocarbon group; R¹ to R¹⁰ may each represent a residue derived by removing any one of R¹ to R¹⁰ from the structure represented by the general formula (1), or a residue derived by removing hydrogen from any one of R¹ to R¹⁰; and the phrase "in the hydrocarbon group" refers to "inside the hydrocarbon group", "at terminals of the hydrocarbon group", or "within bonds of the hydrocarbon group"], a cationic polymerization initiator (i), and optionally a surfactant (e).

A second aspect of the present invention provides a heat-curable resin composition according to the first aspect of the present invention, further including a polyol (b) having two or more hydroxyl groups on terminals.

A third aspect of the present invention provides a heat-curable resin composition including an alicyclic epoxy compound (a') having a structure represented by the following general formula (2), 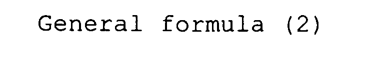 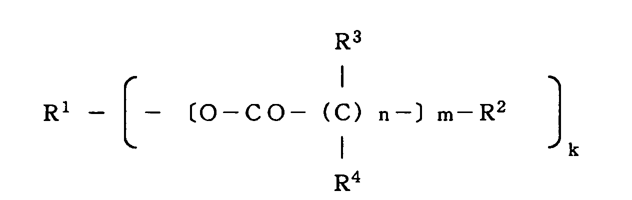 or 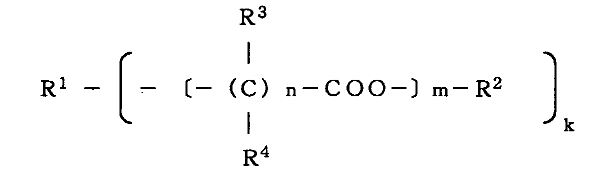 [In the general formula (2) : R¹ represents hydrogen, or a k-valence hydrocarbon group having 1 to 20 carbon atoms, and an ether bond, an ester bond, or an alcoholic hydroxyl group may be included in the hydrocarbon group; R² represents hydrogen, a hydroxyl group, or a hydrocarbon group having 1 to 20 carbon atoms, and an ether bond, an ester bond, or an alcoholic hydroxyl group may be included in the hydrocarbon group; at least one of R¹ and R² may represent a residue derived by removing any one of R¹ to R¹⁰ from the structure represented by the general formula (1); R³ and R⁴ each represents hydrogen, or a hydrocarbon group having 1 to 20 carbon atoms, preferably hydrogen or a methyl group; a plurality of R³s and R⁴s may be the same or different from each other; "n" represents an integer of 3 to 10; "m" represents an integer of 2 to 10; "k" represents an integer of 1 to 10; when k is 2 or more, k group structures may be the same or different from each other; and the phrase "in the hydrocarbon group" refers to "inside the hydrocarbon group", "at terminals of the hydrocarbon group", or "within bonds of the hydrocarbon group"], 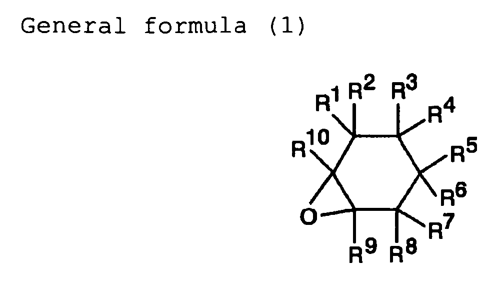 [In the general formula (1) : R¹ to R¹⁰ each represent hydrogen, or a saturated or unsaturated hydrocarbon group having 1 to 20 carbon atoms, and an ether bond, an ester bond, or an alcoholic hydroxyl group may be included in the hydrocarbon group; R¹ to R¹⁰ may each represent a residue derived by removing any one of R¹ to R¹⁰ from the structure represented by the general formula (1), or a residue derived by removing hydrogen from any one of R¹ to R¹⁰; and the phrase "in the hydrocarbon group" refers to "inside the hydrocarbon group", "at terminals of the hydrocarbon group", or "within bonds of the hydrocarbon group"], a cationic polymerization initiator (i), and optionally a surfactant (e).

A fourth aspect of the present invention provides a curable-resin composition according to any one of the first to third aspects of the present invention, characterized in that the surfactant (e) is a silicon-based surfactant (e1) having a dimethylsiloxane skeleton and/or a fluorine-based surfactant (e2) having hydrophobic groups of a hydrocarbon-based surfactant entirely or partially substituted with fluorine atoms.

A fifth aspect of the present invention provides a cured product, which is obtained by heat curing the heat-curable resin composition according to any one of the first to fourth aspects of the present invention.

A sixth aspect of the present invention provides a cured product according to the fifth aspect of the present invention, which is used for an adhesive or an encapsulant.

A seventh aspect of the present invention provides a cured product according to the fifth or sixth aspect of the present invention, in which a warping by shrinkage in curing is 15 mm or less through a measurement method A, 6 mm or less through a measurement method B.

### Best Mode for carrying out the Invention

The heat-curable resin composition of the present invention is classified into two types as described below.

One type is a heat-curable resin composition (I) including an alicyclic epoxy compound (a) having a structure represented by the above general formula (1), a cationic polymerization initiator (i) [such as a curing catalyst (c) or a curing agent (d), which may be used in combination], and a surfactant (e).

The heat-curable resin composition (I) may further include a polyol (b) having two or more hydroxyl groups on terminals.

The other type is a heat-curable resin composition (II) including an alicyclic epoxy compound (a') having a structure represented by the above general formula (2), a cationic polymerization initiator (i), and a surfactant (e).

### <Alicyclic epoxy compound>

Examples of the alicyclic epoxy compound used in the present invention include: compounds corresponding to the above general formula (1) such as CEL-2021P, CEL-2021A (both are 3,4-epoxycyclohexylmethyl-3',4'-epoxycyclohexane carboxylate), CEL-2000 (1-vinyl-3,4-epoxycyclohexane), CEL-3000 (1,2,8,9-epoxylimonene), CYCLOMER A200, and CYCLOMER M100 (all available from Daicel Chemical Industries, Ltd.); compounds corresponding to the above general formula (2) such as CEL-2081, EPOLEAD GT-401, EPOLEAD GT-403, EPOLEAD GT-301, EPOLEAD GT-302 (all available from Daicel Chemical Industries, Ltd.), and DENACOL 701 (diglycidyl adipate, available from Nagase & Co., Ltd.).

Further examples of the alicyclic epoxy compound include DENACOL EX-421, DENACOL EX-201 (both are resorcinol diglycidyl ether), DENACOL EX-211 (neopentyl glycol diglycidyl ether), DENACOL EX-911 (propylene glycol diglycidyl ether), DENACOL EX-701 (diglycidyl adipate) (all available from Nagase & Co., Ltd.).

### <Polyol (b)>

An example of the polyol (b) used in the present invention includes polyester polyol (b') having terminal hydroxyl groups obtained through condensation of a polyvalent alcohol component and a polybasic acid component. Examples of the polyvalent alcohol component include: diols such as ethylene glycol, propylene glycol, diethylene glycol, and butylene glycol; triols such as trimethylolpropane, hexanetriol, and glycerin; pentaerythritol; and sorbitol. Examples of the polybasic acid component include succinic acid, adipic acid, maleic acid, fumaric acid, phthalic acid, isophthalic acid, HET acid, succinic anhydride, maleic anhydride, and phthalic anhydride or the like.

Examples of the polyester polyol include compounds each obtained through ring-opening polymerization of cyclic lactones by using glycerin, pentaerythritol, or sorbitol as an initiator such as PLACCEL 205, PLACCEL 220, PLACCEL 305, and PLACCEL 308 (all available from Daicel Chemical Industries, Ltd.)

Polyether polyol (b") may be used in addition to polyols as described above, and an example thereof includes an alkylene oxide adductofapolyalcohol. Examples of the polyvalent alcohol include: dihydric alcohols such as ethylene glycol, propylene glycol, 1,4-butanediol, 1,3-butanediol, 1,6-hexanediol, neopentyl glycol, 1,8-octanediol, 1,10-decanediol, and diethylene glycol; trihydric alcohols such as trimethylolpropane, glycerin, hexanetriol, and triethanolamine; and tetrahydric alcohols such as diglycerin and pentaerythritol. Further examples of the polyvalent alcohol include sorbitol, mannitol, dulcitol, and sucrose. At least one of ethylene oxide, propylene oxide, and the like is appropriately selected and used as the alkylene oxide. The polyether polyol includes a so-called polymer polyol obtained through polymerization of acrylonitrile, styrene, or the like in polyether polyol.

### <Curing catalyst (c) and curing agent (d)>

In the present invention, the cationic polymerization initiator (i) which generates cation species by light or heat can be used as the curing catalyst (c) or the curing agent (d).

Examples of the cationic polymerization initiator include sulfonium salt-based compounds, iodonium salt-based compounds, diazonium salt-based compounds, and allene-ion complex-based compounds. Examples thereof include: sulfonium salt-based compounds such as UVACURE 1590, UVACURE 1591 (both available from DAICEL-UBC Company, Ltd.), DAICAT 11 (available from Daicel Chemical Industries, Ltd.), CD-1011 (available from Sartomer Company, Inc.), SI-60L, SI-80L, and SI-100L (all available from Sanshin Chemical, Ltd.); iodonium salt-based compounds such as DAICAT 12 (available from Daicel Chemical Industries, Ltd.) and CD-1012 (available from Sartomer Company, Inc.); and diazonium salt-based compounds such as SP-150 and SP-170 (both available from Asahi Denka Co., Ltd.). Further, a silanol-based cationic catalyst such as triphenyl silanol can be used.

In the heat-curable resin composition of the present invention, the cationic polymerization initiator (i) is mixed in about 0.01 to 20 parts by weight, preferably about 0.1 to 5 parts by weight, more preferably about 0.1 to 3 parts by weight with respect to 100 parts by weight of the alicyclic epoxy compound (a) and the polyol (b) in total [or the alicyclic epoxy compound (a')].

A content of the cationic polymerization initiator (i) of 0.01 part by weight or less is not preferable because such content significantly degrades heat curability. The content thereof exceeding 20 parts by weight is not preferable because such content provides no effect of increased content, is uneconomical, and causes degradation of physical properties in a cured product.

In the present invention, an acid anhydride can also be used as the curing agent (d). Examples of the acid anhydride include acid anhydrides each preferably having one or two aliphatic rings or aromatic rings and one or two acid anhydride groups in a molecule, and having about 4 to 25 carbon atoms, preferably about 8 to 20 carbon atoms such as tetrahydrophthalic anhydride, methyltetrahydrophthalic anhydride, methylhexahydrophthalic anhydride, hexahydrophthalic anhydride, methyl himic anhydride, pyromellitic dianhydride,benzophenonetetracarboxylic dianhydride, 3,3'-4,4'-biphenyltetracarboxylic dianhydride, bis(3,4-dicarboxyphenyl)ether dianhydride, bis(3,4-dicarboxyphenyl)methane dianhydride, and 2,2-bis(3,4-dicarboxyphenyl)propane dianhydride.

In this case, a compound containing 0.5% by weight or less (that is, 0 to 0.5% by weight), particularly 0.4% by weight or less (that is, 0 to 0.4% by weight) of a compound having a carboxyl group (COOH group) is used as an acid anhydride. A content of the carboxyl group of more than 0.5% by weight is not preferable because the acid anhydride may crystallize. The content of the carboxyl group (COOH group) is 0.3% by weight or less (that is, 0 to 0.3% by weight), particularly 0.25% by weight or less (that is, 0 to 0.25% by weight) with respect to that of the acid anhydride curing agent for the same reason.

The content of the acid anhydride is adjusted such that a ratio of the acid anhydride group in the curing agent is desirably 0.3 to 0.7 mole with respect to 1 mole of an epoxy group in an epoxy resin. A ratio thereof of less than 0.3 mole provides insufficient curability, and the ratio thereof exceeding 0.7 mole may allow unreacted acid anhydride to remain and may reduce a glass transition temperature. The ratio thereof is more desirably 0.4 to 0.6 mole.

In addition, phenol-based curing agents or the like may be used.

### <Surfactant (e)>

The surfactant (e) optionally used in the present invention is a component for adjusting a filling property of the resin composition into minute depressed parts, surface smoothness of a cured coating film, and defoaming property and surface tension of the resin composition. The purposes can be sufficiently attained by using a general antifoaming agent, a surface smoothing agent, a wetting dispersant, or the like. However, the surfactant is desirably a silicon-based surfactant having a dimethylsiloxane skeleton (e1) or a fluorine-based surfactant prepared by partly or entirely substituting hydrophobic groups of a hydrocarbon-based surfactant with fluorine atoms (e2). One surfactant or two or more surfactants may be used as a mixture in an arbitrary ratio.

Examples of commercially available surfactants include: BYK333 (available from BYK-Chemie Japan KK) as the surfactant (e1) ; and FC-430 (available from Sumitomo 3M Ltd.) as the surfactant (e2) .

The content of the surfactant (e) is preferably 0.05 to 5 parts by weight, more preferably 0.1 to 2 parts by weight with respect to 100 parts by weight of the alicyclic epoxy compound (a) and the polyol (b) in total [or the alicyclic epoxy compound (a')].

The content of the surfactant of less than 0. 05 part by weight may easily cause problems in filling property of the resin composition into minute depressed parts, surface smoothness of a cured coating film, and defoaming property of the resin composition. In contrast, the content thereof exceeding 5 parts by weight may easily cause craters, floating, orange peels, and fish eyes in application of the composition due to reduction in surface tension and cause problems in defoaming property of the resin composition. Thus, the content is not preferable because such content provides no effect of increased content, is uneconomical, and causes degradation of physical properties of a cured product.

In the present invention, the resin composition may optionally contain other monomers which may be subjected to cationic polymerization including: cyclic ethers; cyclic esters; spiroorthocarbonates; bicycloorthoesters; polyols which may copolymerize with epoxy compounds; photocationic polymerization initiators; photosensitizers such as thioxanthone; modifiers such as silane coupling agents. The addition amounts thereof are not particularly limited without adversely affecting the effects of the present invention.

In the present invention, a filler may be optionally used. An organic filler or an inorganic filler may be used as the filler, but an inorganic filler is preferable from the viewpoint of coefficient of thermal expansion. Examples of the organic filler include an acrylic resin, a polystyrene resin, a polyethylene resin, an epoxy resin, and a silicone resin. Examples of the inorganic filler include alumina, talc, glass powder, ceramic powder, crystalline silica, and fused silica. The content of the filler is not particularly limited without adversely affecting the effects of the present invention.

The heat-curable resin composition of the present invention may be applied as a liquid onto a flexible film or screen-printed on a flexible film according to the uses thereof. In particular, in a case where precise working is required such as in production or the like of electronic parts, the heat-curable resin composition is preferably applied onto a flexible film and heated.

Examples of the flexible film include synthetic resin films of a polyimide, a polyethylene terephthalate, a polyethylene, a polypropylene, a polycarbonate, or a polyvinyl chloride each having a thickness of 15 to 125 µm.

The heat-curable resin composition of the present invention can be formed into a coating film by: applying the resin composition such that a film thickness is 10 to 100 µm after heat curing using an applicator, a bar coater, a wire bar coater, a roll coater, or a curtain flow coater; and heating the whole.

A heat curing temperatures is 35 to 200 °C, preferably 45 to 150°C.

A heat curing time is 10 minutes to 5 hours, preferably 30 minutes to 3 hours.

A heat curing atmosphere may be any of atmosphere, air, and an inert gas.

The cured product of the curable resin composition of the present invention has a warping of 15 mm or less, preferably 10 mm or less through a measurement method A, 6 mm or less, preferably 5 mm or less through a measurement method B as described below in the section "Measurement of warping by shrinkage in curing".

Therefore, the internal stress after curing reduces with reduction of shrinkage in curing, to thereby realize favorable adhesion strength, reduction in warping, and improvement in dimensional accuracy as an adhesive or an insulating encapsulant used for assembly of optical parts or electronic parts requiring precise accuracy of position.

### [Examples]

Hereinafter, the present invention will be described more specifically by way of examples, but the present invention is not limited thereto.

Raw materials used herein are listed below. "Parts" of the raw materials used refer to "parts by weight".

CEL 2081: an alicyclic epoxy resin, available from Daicel Chemical Industries, Ltd. having a structure obtained through ring-opening addition of ε-caprolactone within an ester bond of 3,4-epoxycyclohexylmethyl-3',4'-epoxycyclohexane carboxylate; liquid; epoxy equivalent of 200 to 215.

CEL 2021P: an alicyclic epoxy resin, available from Daicel Chemical Industries, Ltd.; 3,4-epoxycyclohexylmethyl-3',4'-epoxycyclohexane carboxylate.

PCL 308: a polycaprolactone triol, available from Daicel Chemical Industries, Ltd.; OH value of 195 mg-KOH/g.

SI 100L: a cationic polymerization initiator, available from Sanshin Chemical Industry Co., Ltd.

BYK333:a silicon-based surfactant, available from BYK-Chemie GmbH.

FC 430: a fluorine-based surfactant, available from Sumitomo 3M Ltd.

### (Measurement of warping by shrinkage in curing)

A curable resin composition was applied onto a polyimide film (Kapton 300H, available from Du Pont-Toray Co., Ltd.; thickness of 75 µm) to have a thickness of 50 µm after curing, and the whole was heated at a predetermined temperature for a predetermined period of time for curing. Then, the applied polyimide film was cut into small pieces of 40 mm x 45 mm.

Measurement method A: One shorter side of each of the thus-obtained small pieces was held down by a finger, and heights of two vertices of the remaining shorter side were measured to provide values for warping by shrinkage in curing.

Measurement method B: Each of the thus-obtained small pieces was placed such that the center of the small piece was in contact with the ground. Heights of four vertices were measured to provide values for warping by shrinkage in curing.

Five or more small pieces were tested for each of the measurement methods A and B, and the value for warping by shrinkage in curing was represented by an average value obtained in the measurement methods.

### (Example 1)

A composition containing 100 parts of the alicyclic epoxy resin CEL2081, 0.6 part of SI100L, and 0.1 part of BYK333 was applied onto a polyimide film, and the whole was heated at 100°C for 1 hour for curing. Then, the applied film was subjected to measurement of warping by shrinkage in curing. As a result, the applied film had a warping by shrinkage in curing of 10.0 mm through the measurement method A, and 4.0 mm through the measurement method B.

### (Example 2)

A composition containing 100 parts of the alicyclic epoxy resin CEL2081, 0.6 part of SI100L, and 0.1 part of FC430 was applied onto a polyimide film, and the whole was heated at 100°C for 1 hour for curing. Then, the applied film was subjected to measurement of warping by shrinkage in curing. As a result, the applied film had a warping by shrinkage in curing of 7.0 mm through the measurement method A, and 2.3 mm through the measurement method B.

### (Example 3)

A composition containing 80 parts of the alicyclic epoxy resin CEL2021P, 20 parts of polycaprolactone triol PCL308, 0.6 part of SI100L, and 0.1 part of FC430 was applied onto a polyimide film, and the whole was heated at 65°C for 2 hours, and then at 150°C for 1 hour for curing. Then, the applied film was subjected to measurement of warping by shrinkage in curing. As a result, the applied film had a warping by shrinkage in curing of 7.0 mm through the measurement method A, and 2. 3 mm through the measurement method B.

### (Comparative Example 1)

A composition containing 100 parts of the alicyclic epoxy resin CEL2021P, 0.6 part of SI100L, and 0.1 part of BYK333 was applied onto a polyimide film, and the whole was heated at 65°C for 2 hours, and then at 150°C for 1 hour for curing. Then, the applied film was subjected to measurement of warping by shrinkage in curing. As a result, the applied film had a warping by shrinkage in curing of 24.5 mm through the measurement method A, and 7.3 mm through the measurement method B.

### (Comparative Example 2)

A composition containing 100 parts of the alicyclic epoxy resin CEL2021P, 0.6 part of SI100L, and 0.1 part of BYK333 was applied onto a polyimide film, and the whole was heated at 90°C for 2 hours for curing. Then, the applied film was subjected to measurement of warping by shrinkage in curing. As a result, the applied film had a warping by shrinkage in curing of 20 mm through the measurement method A, and 7.0 mm through the measurement method B.

Table 1 collectively shows the results.

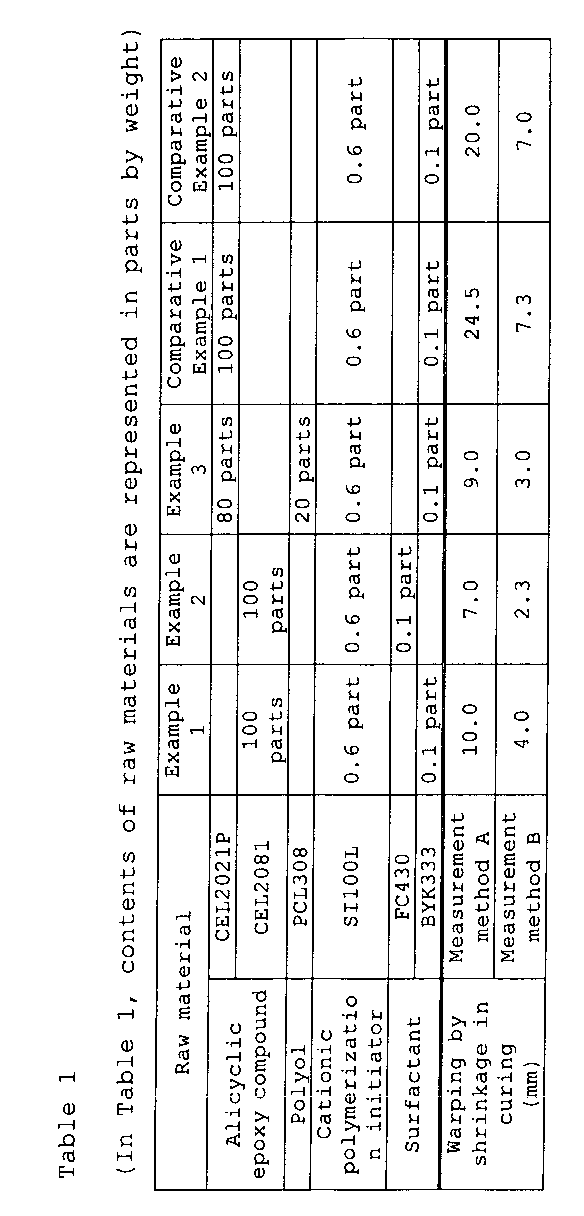

The curable resin composition of the present invention provides low shrinkage in curing after heating, and little warping of the flexible film formed after application of the composition.

### Industrial Applicability

The heat-curable resin composition or heat-cured product of the composition of the present invention can be used as a useful material exhibiting favorable adhesion strength and dimensional accuracy, and in particular, as an adhesive or insulating encapsulant used for assembly of optical parts or electronic parts requiring precise accuracy of position.

## Claims

1. A heat-curable resin composition comprising an alicyclic epoxy compound (a) having a structure represented by the following general formula (1), 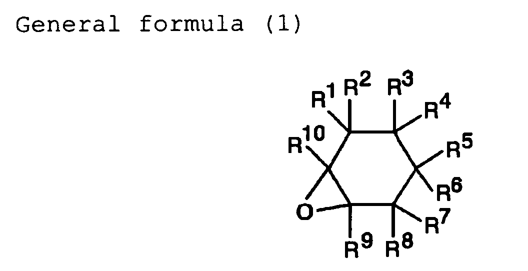 [In the general formula (1): R¹ to R¹⁰ each represent hydrogen, or a saturated or unsaturated hydrocarbon group having 1 to 20 carbon atoms (an ether bond, an ester bond, or an alcoholic hydroxyl group may be included in the hydrocarbon group) ; R¹ to R¹⁰ may each represent a residue derived by removing any one of R¹ to R¹⁰ from the structure represented by the general formula (1), or a residue derived by removing hydrogen from any one of R¹ to R¹⁰; and the phrase "in the hydrocarbon group" refers to "inside the hydrocarbon group", "at terminals of the hydrocarbon group", or "within bonds of the hydrocarbon group"], a cationic polymerization initiator (i), and optionally a surfactant (e).

2. A heat-curable resin composition according to claim 1, further comprising a polyol (b) having two or more hydroxyl groups on terminals.

3. A heat-curable resin composition comprising an alicyclic epoxy compound (a') having a structure represented by the following general formula (2), 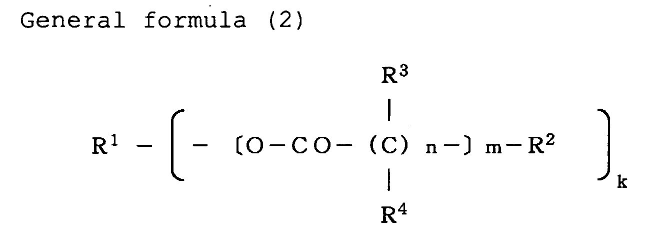 or 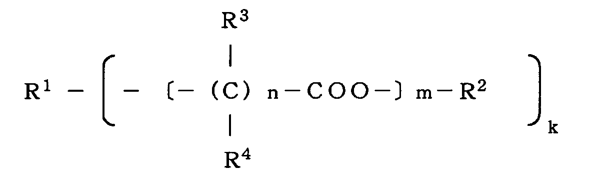 [In the general formula (2) : R¹ represents hydrogen, or a hydrocarbon group of a valence k having 1 to 20 carbon atoms (an ether bond, an ester bond, or an alcoholic hydroxyl group may be included in the hydrocarbon group); R² represents hydrogen, a hydroxyl group, or a hydrocarbon group having 1 to 20 carbon atoms (an ether bond, an ester bond, or an alcoholic hydroxyl group may be included in the hydrocarbon group); at least one of R¹ and R² may represent a residue derived by removing any one of R¹ to R¹⁰ from the structure represented by the following general formula (1); R³ and R⁴ each represents hydrogen, or a hydrocarbon group having 1 to 20 carbon atoms; a plurality of R³s and R⁴s may be the same or different from each other; "n" represents an integer of 3 to 10; "m" represents an integer of 2 to 10; "k" represents an integer of 1 to 10; when "k" is 2 or more, "k" pieces of group structures (that is, "k" pieces of ns, ms, R²s, R³s, and R⁴s) may be the same or different from each other; and the phrase "in the hydrocarbon group" refers to "inside the hydrocarbon group", "at terminals of the hydrocarbon group", or "within bonds of the hydrocarbon group"], 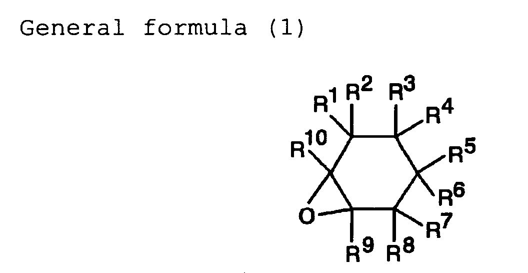 [In the general formula (1): R¹ to R¹⁰ each represent hydrogen, or a saturated or unsaturated hydrocarbon group having 1 to 20 carbon atoms (an ether bond, an ester bond, or an alcoholic hydroxyl group may be included in the hydrocarbon group) ; R¹ to R¹⁰ may each represent a residue derived by removing any one of R¹ to R¹⁰ from the structure represented by the general formula (1), or a residue derived by removing hydrogen from any one of R¹ to R¹⁰; and the phrase "in the hydrocarbon group" refers to "inside the hydrocarbon group", "at terminals of the hydrocarbon group", or "within bonds of the hydrocarbon group"], a cationic polymerization initiator (i), and optionally a surfactant (e).

4. A curable-resin composition according to claim 1, **characterized in that** the surfactant (e) comprises a silicon-based surfactant (e1) having a dimethylsiloxane skeleton and/or a fluorine-based surfactant (e2) having hydrophobic groups of a hydrocarbon-based surfactant entirely or partially substituted with fluorine atoms.

5. A curable-resin composition according to claim 2, **characterized in that** the surfactant (e) comprises a silicon-based surfactant (e1) having a dimethylsiloxane skeleton and/or a fluorine-based surfactant (e2) having hydrophobic groups of a hydrocarbon-based surfactant entirely or partially substituted with fluorine atoms.

6. A curable-resin composition according to claim 3, **characterized in that** the surfactant (e) comprises a silicon-based surfactant (e1) having a dimethylsiloxane skeleton and/or a fluorine-based surfactant (e2) having hydrophobic groups of a hydrocarbon-based surfactant entirely or partially substituted with fluorine atoms.

7. A cured product, which is obtained by heat curing the heat-curable resin composition according to any one of claims 1 to 6.

8. A cured product according to claim 7, which is used for an adhesive or an encapsulant.

9. A cured product according to claim 7, wherein a warping by shrinkage in curing is 15 mm or less through a measurement method A, 6 mm or less through a measurement method B.

10. A cured product according to claim 8, wherein a warping by shrinkage in curing is 15 mm or less through a measurement method A, 6 mm or less through a measurement method B.
